# FASCICULE DE BREVET EUROPEEN

(11) **EP 0 656 272 B1**
(45) Date de publication et mention de la délivrance du brevet: **12.08.1998**
(21) Numéro de dépôt: 94402622.8
(22) Date de dépôt: 17.11.1994
(51) Int. Cl.: B60H 1/00

(54) **Dispositif de distribution pour une installation de climatisation de véhicule automobile**
Verteilungsvorrichtung für eine Fahrzeugklimaanlage
Distribution device for a motor vehicle air conditioning installation

(30) Priorité: 02.12.1993 FR 9314465
(43) Date de publication de la demande: 07.06.1995
(73) Titulaire: AUTOMOBILES PEUGEOT, 75116 Paris (FR); AUTOMOBILES CITROEN, 92200 Neuilly-sur-Seine (FR)
(72) Inventeur: Bach, Patrick, F-78960 Voisins le Bretonneux (FR)
(74) Mandataire: Berger, Helmut

(56) Documents cités:
- EP-A- 0 167 268
- EP-A- 0 296 555
- PATENT ABSTRACTS OF JAPAN vol. 7, no. 68 (M-201) (1213) 19 Mars 1983 & JP-A-57 209 414 (NIPPON DENSO) 22 Décembre 1982

## Description

La présente invention concerne un dispositif de distribution pour une installation de climatisation d'un véhicule automobile.

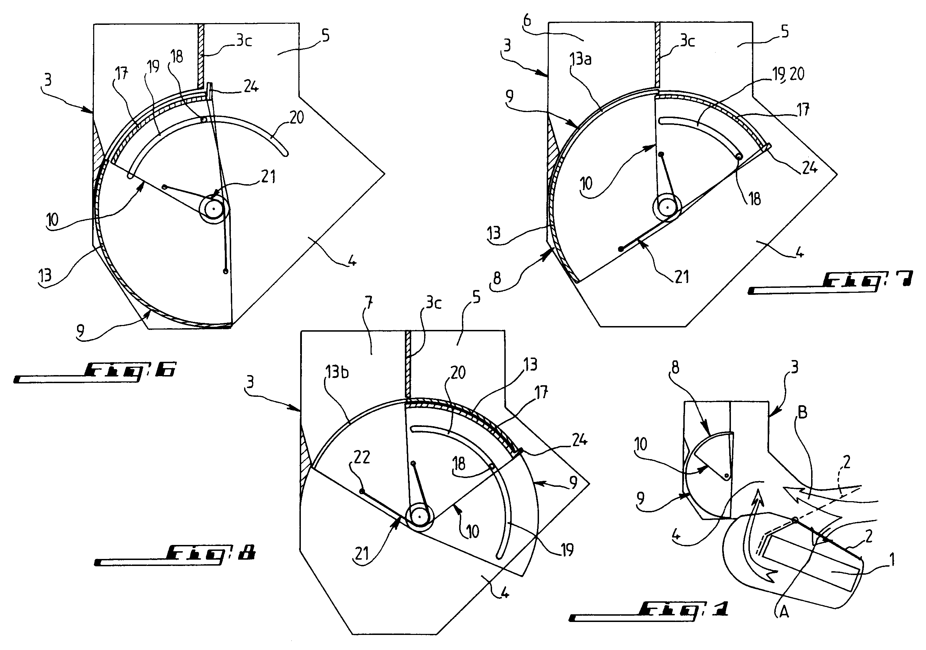

On connaît un dispositif de distribution qui, comme représenté en figure 1, permet de distribuer de l'air froid ou de l'air chaud à l'intérieur d'un véhicule automobile.

Plus précisément, le flux d'air issu d'une soufflante (non représentée) est séparé en deux courants, l'un symbolisé par la flèche A et passant à travers un échangeur de chaleur ou aérotherme 1 pour y être réchauffé et l'autre symbolisé par la flèche B et passant à côté de l'échangeur 1.

Ce dispositif connu comprend un moyen formant volet 2 permettant de diriger le flux d'air dans l'une des directions symbolisée par la flèche A ou B ou d'opérer un mélange de ces courants selon la température que l'on souhaite obtenir dans l'habitacle du véhicule.

Le flux est ensuite dirigé, à travers des conduites dont la direction est appropriée, vers des ouïes débouchant dans le véhicule, certaines au niveau du pare-brise pour le dégivrage et le désembuage de celui-ci, d'autres au niveau du plancher du véhicule pour le chauffage de l'habitacle et d'autres enfin, dites d'aération, débouchant principalement au niveau du tableau de bord du véhicule.

Le dispositif de distribution comprend un autre moyen formant volet ou vanne permettant de distribuer le flux d'air, réchauffé ou non, entre l'une ou l'autre des sorties du boîtier 3 du dispositif et raccordées aux ouïes par l'intermédiaire des conduites. Un tel moyen formant volet peut être constitué de plusieurs volets distincts ou de deux volets entraînés en rotation par un même axe de commande.

Cependant, ces dispositifs de distribution connus ont pour inconvénient majeur d'être extrêmement encombrants du fait de la présence de conduites de sortie du boîtier du dispositif ayant différentes directions. De plus, dans le cas du dispositif de distribution à deux volets, le mécanisme d'entraînement de ces volets est très complexe et coûteux.

Le document EP-A-0 296 555 décrit un dispositif de distribution pour une installation de climatisation de véhicule automobile comprenant les caractéristiques énoncées dans le préambule de la revendication 1.

Comme pour les autres dispositifs de l'art antérieur, ce dispositif connu a pour inconvénient d'être encombrant et de structure complexe.

La présente invention a pour but d'éliminer les inconvénients ci-dessus des dispositifs connus en proposant un dispositif de distribution pour une installation de climatisation plus compact que les dispositifs connus tout en étant d'une conception extrêmement simplifiée.

A cet effet, le dispositif de distribution pour une installation de climatisation de véhicule automobile suivant l'invention comprend un boîtier ayant une entrée d'air et plusieurs sorties pouvant être raccordées respectivement à des ouïes de dégivrage et de désembuage de vitres du véhicule, de chauffage de l'habitacle du véhicule et d'aération de celui-ci, et un moyen d'obturation sélective des sorties logé dans le boîtier pour contrôler l'écoulement d'air à travers celles-ci, et est caractérisé en ce que les sorties du boitier sont situées dans un même plan.

Selon un mode de réalisation de l'invention, le moyen d'obturation comprend un boisseau constitué de deux volets d'obturation respectivement à deux calottes cylindriques concentriques de longueurs d'arcs de cercle différentes et montées, par l'intermédiaire de flasques radiaux, l'une solidaire en rotation d'un axe d'entraînement commandé monté sur le boîtier et l'autre à rotation autour de cet axe de façon à permettre l'entraînement simultané en rotation des deux calottes cylindriques en prolongement l'une de l'autre d'une position initiale d'ouverture de l'une des sorties du boîtier, telle que celle d'aération, et d'obturation des autres sorties à une seconde position d'obturation de la sortie précédemment obturée et d'ouverture de l'une des autres sorties, telle que celle de dégivrage et de désembuage, et ensuite l'entraînement en rotation à une troisième position de la calotte cylindrique de plus grande dimension au-dessus de l'autre calotte cylindrique bloquée à la seconde position d'obturation de la susdite sortie de façon à obturer l'une précitée des autres sorties et à ouvrir l'autre sortie restante, telle que celle de chauffage de l'habitacle du véhicule.

Avantageusement, les deux calottes cylindriques sont maintenues en prolongement l'une de l'autre par un ressort monté sur l'axe d'entraînement et ayant l'une de ses extrémités fixée à l'un des flasques d'une calotte cylindrique et son autre extrémité fixée au flasque adjacent de l'autre calotte cylindrique et la calotte cylindrique de plus grande dimension est déplacée au-dessus de l'autre calotte à l'encontre de la force de rappel du ressort maintenant les deux calottes en prolongement l'une de l'autre.

L'un des flasques de la calotte cylindrique de plus faible dimension porte un pion traversant à la fois une lumière curviligne du flasque adjacent de l'autre calotte cylindrique et une lumière curviligne analogue réalisée dans une paroi d'extrémité du boîtier et prolongeant, en position initiale des deux calottes, l'autre lumière curviligne en étant concentriques toutes les deux à l'axe d'entraînement, le pion se trouvant sensiblement en butée dans les deux fonds superposés respectivement des deux lumières en prolongement l'une de l'autre à la position initiale des calottes et, à la seconde position précitée, le pion est en butée contre le fond de la lumière du boîtier pour bloquer en rotation la calotte de plus faible dimension.

La calotte de plus grande dimension comprend deux ouvertures décalées angulairement et axialement correspondant respectivement à deux sorties du boîtier, telles que celles de chauffage de l'habitacle du véhicule et de dégivrage et de désembuage.

La calotte de plus faible dimension est maintenue en position initiale d'obturation des autres sorties du boîtier par un rebord de la calotte en appui sur une paroi du boîtier délimitant la sortie ouverte du boîtier à cette position.

L'invention sera mieux comprise et d'autres buts, caractéristiques détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels.

La figure 1 représente le dispositif de distribution de l'invention installé dans une climatisation pour véhicule automobile.

La figure 2 représente la structure des deux volets d'obturation du dispositif de distribution de l'invention.

La figure 3 est une vue suivant la flèche III de la figure 2.

La figure 4 représente en perspective les deux volets du dispositif de distribution de l'invention.

La figure 5 est une vue en perspective du boîtier du dispositif de distribution.

Les figures 6 à 8 représentent respectivement trois positions de fonctionnement du dispositif de distribution de l'invention.

En se reportant aux figures, le dispositif de distribution pour une installation de climatisation de véhicule automobile comprend, comme déjà expliqué en référence à la figure 1, un boîtier 3 comportant une entrée 4 d'air chauffé ou non selon que le flux d'air passe ou non à travers l'aérotherme 1 et plusieurs sorties, dans le cas présent au nombre de trois, portant les références 5, 6 et 7, destinées à être raccordées, par l'intermédiaire de conduites (non représentées) respectivement à des ouïes d'aération de l'habitacle du véhicule, de chauffage de celui-ci et de dégivrage et de désembuage du pare-brise et, le cas échéant, des vitres latérales du véhicule. Un moyen 8 d'obturation sélective des sorties 5-7 est logé dans le boîtier 3 du dispositif de distribution pour contrôler l'écoulement d'air à travers ces sorties.

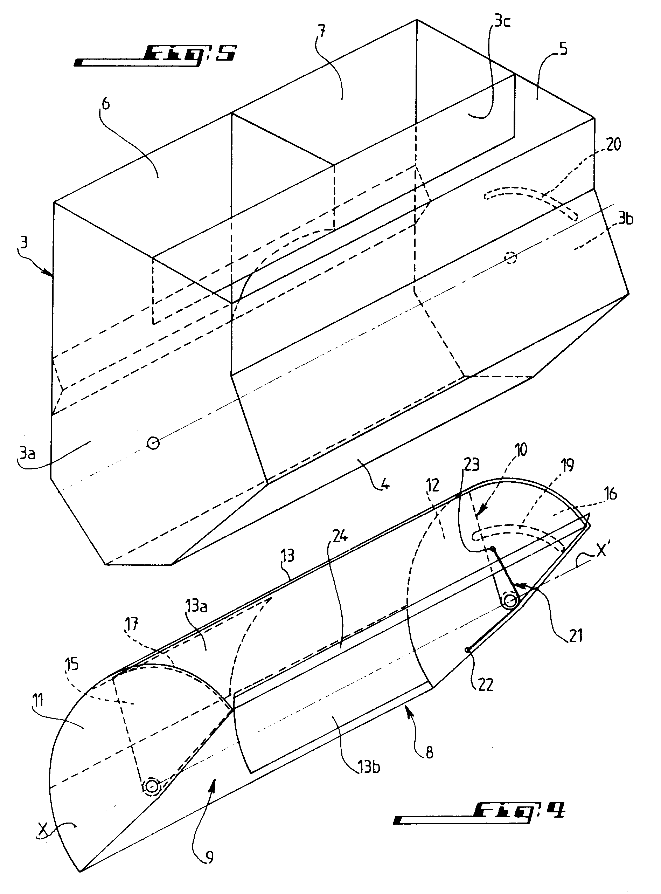

Selon l'invention, les sorties 5-7 du boîtier 3 sont situées dans un même plan comme cela ressort notamment de la figure 5. Cet agencement rend plus compact le boîtier 3 du dispositif de distribution par rapport à ceux connus jusqu'à maintenant et selon lesquels les sorties étaient définies par des conduites du boîtier ayant des directions différentes.

Le moyen d'obturation 8, faisant partie de l'invention, comprend un boisseau rotatif constitué de deux volets d'obturation 9 et 10.

Le volet d'obturation 9 comprend deux flasques parallèles 11, 12 solidaires en rotation d'un axe d'entraînement symbolisé par le trait mixte X-X' et perpendiculaires à celui-ci, et reliés entre eux par une paroi 13 en forme de calotte cylindrique raccordée à la périphérie de ces flasques sur un arc de cercle d'angle α inférieur à l'angle total β de chaque flasque 11, 12. La calotte cylindrique 13 comporte deux ouvertures principales 13a, 13b décalées angulairement et axialement, l'ouverture 13a correspondant à la sortie 6 de chauffage par le plancher de l'habitacle du véhicule tandis que l'ouverture 13b correspondant à la sortie 7 de dégivrage et de désembuage. L'axe d'entraînement est supporté rotatif entre deux parois d'extrémité 3a, 3b du boîtier 3 et est relié à un moyen de commande en rotation 14, par exemple du type à manivelle.

Le volet d'obturation 10 comprend également deux flasques parallèles 15, 16 montés à rotation libre sur l'axe d'entraînement perpendiculairement à celui-ci et entre lesquels s'étend une paroi 17 formant une calotte cylindrique reliée à la périphérie de ces flasques sur un arc de cercle d'angle inférieur à l'arc de cercle de la calotte cylindrique 13 du volet 9, les deux calottes cylindriques 13 et 17 étant montées concentriquement à l'axe d'entraînement avec la calotte de plus grande dimension 13 pouvant se déplacer relativement à la calotte cylindrique 17 au-dessus de cette dernière comme cela sera expliqué ultérieurement.

Le volet 10 comporte également un pion 18 porté par le flasque d'extrémité 15 du volet 10 perpendiculairement à celui-ci et traversant à la fois une lumière curviligne 19 du flasque adjacent 12 de l'autre volet 9 et une lumière curviligne analogue 20 réalisée dans la paroi d'extrémité 3b du boîtier 3, les deux lumières curvilignes 19 et 20 étant concentriques à l'axe d'entraînement des deux volets 9, 10. La fonction du pion 18 sera expliquée ultérieurement.

Les deux volets 9, 10 sont liés entre eux par un ressort 21 monté sur l'axe d'entraînement et ayant l'une de ses extrémités fixée en un point 22 au flasque 12 du volet 9 et son autre extrémité fixée en un point 23 au flasque adjacent 15 du volet 10. Le ressort 21 est destiné à maintenir les deux volets 9 et 10 de façon que la calotte cylindrique 17 du volet 10 soit dans le prolongement de la calotte cylindrique 13 du volet 9 à deux positions d'obturation des volets 9, 10 tout en permettant un déplacement du volet 9 relativement au volet 10 à l'encontre de la force de rappel du ressort 21 comme cela va être expliqué ci-dessous.

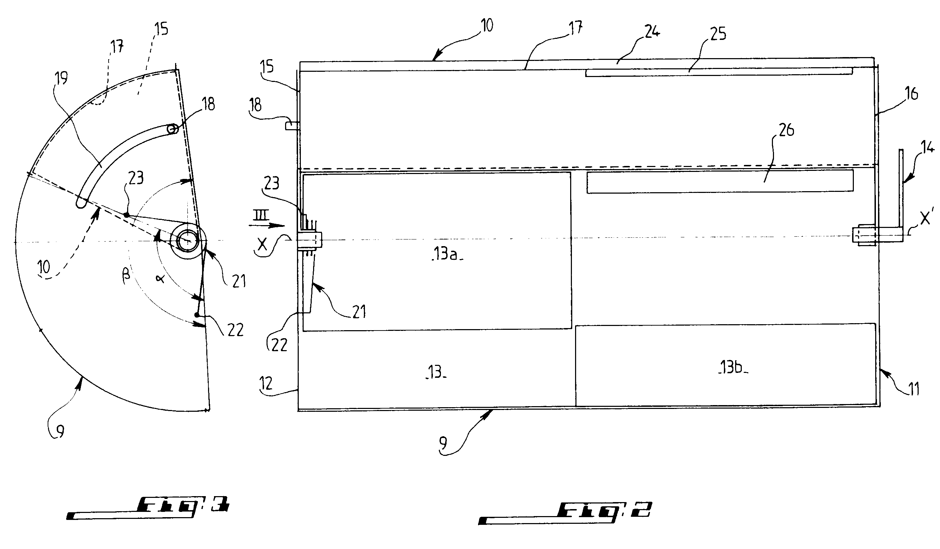

En position initiale du dispositif de distribution représentée aux figures 2-4 et 6, la calotte cylindrique 17 du volet 10 est dans le prolongement de la calotte 13 du volet 9 en étant à l'intérieur de l'angle β défini par les flasques 11, 12 du volet 9. Comme cela ressort notamment de la figure 6, la sortie d'aération 5 du boîtier 3 est ouverte et les sorties 6, 7 sont obturées par la calotte cylindrique 17 du volet 10. Dans ces conditions, le flux d'air, réchauffé ou non par l'aérotherme 1, est dirigé vers la sortie 5. On notera que la calotte cylindrique 17 du volet 10 comporte un rebord 24 en appui sur une paroi 3c du boîtier 3 définissant la sortie 5 de façon à maintenir la calotte 17 en position d'obturation des sorties 6, 7. De plus, toujours en position initiale des volets 9, 10, le pion 18 se trouve sensiblement en butée dans les deux fonds superposés respectivement des deux lumières en prolongement l'une de l'autre 19, 20.

Si l'on souhaite diriger le flux d'air vers la sortie 6 de chauffage de l'habitacle du véhicule, l'axe d'entraînement est commandé de façon à entraîner en rotation le volet 9 dans le sens des aiguilles d'une montre par rapport à la figure 6, et qui entraîne simultanément, par l'intermédiaire du ressort 21, le volet 10 à la position représentée en figure 7 où les deux calottes 13, 17 sont toujours en prolongement l'une de l'autre. A la position de la figure 7, le volet 10 est immobilisé en rotation par le pion 18 en butée dans le fond de la lumière 20 opposée à celui où se trouvait le pion 18 en position initiale de la figure 6. Comme représenté en figure 7, la sortie 5 est obturée par la calotte cylindrique 17 du volet 9 tandis que l'ouverture 13a de la calotte 13 du volet 9 se trouve en face de la sortie 6, la sortie 7 étant obturée par la calotte 13 du volet 9. On notera, à la position représentée en figure 7, que les deux lumières 19 et 20 sont sensiblement superposées l'une au-dessus de l'autre.

Si l'on souhaite diriger le flux d'air vers la sortie 7 de dégivrage et de désembuage, l'axe d'entraînement est de nouveau commandé pour entraîner en rotation le volet 9 relativement au volet 10, qui est immobilisé en rotation par le pion 18 en butée dans le fond de la lumière 20. La calotte cylindrique 13 du volet 9 se déplace ainsi au-dessus de la calotte 17 du volet 10 jusqu'à atteindre la position représentée en figure 8 où elle y est maintenue par le pion 18 en butée dans le fond de la lumière 19. La rotation du volet 9 relativement au volet 10 s'effectue à l'encontre de la force de rappel du ressort 21. A la position représentée en figure 8, la sortie 5 est obturée par la portion de calotte cylindrique du volet 9 et la calotte cylindrique sous-jacente du volet 10 et la sortie 6 est obturée par une autre portion de la calotte 13 du volet 9, tandis que l'ouverture 13b de la calotte 13 se trouve en face de la sortie 7 pour ainsi diriger le flux d'air vers cette sortie.

On notera que pour le mouvement de retour, le volet 10 est manoeuvré de la position représentée en figure 7 à la position représentée en figure 6 par le pion 18 en butée dans la lumière 19 et non par le ressort 21 comme à l'aller. Bien entendu, le volet 10 est arrêté en rotation dans le sens contraire des aiguilles d'une montre par le pion 18 en butée dans la lumière 20 et par son rebord 24 venant en appui sur la paroi 3c du boîtier 3.

Selon une variante de réalisation, les deux volets 9, 10 peuvent comporter des fentes portant les références 25 et 26 en figure 2 pour réaliser des fuites permettant de diriger un flux d'air secondaire dans une direction différente de la sortie principale sélectionnée 5, 6 et 7.

## Revendications

1. Dispositif de distribution pour une installation de climatisation de véhicule automobile, comprenant un boîtier (3) ayant une entrée d'air (4) et plusieurs sorties (5, 6, 7) pouvant être raccordées respectivement à des ouïes de dégivrage et de désembuage de vitres du véhicule, de chauffage de l'habitacle du véhicule et d'aération de celui-ci, et un moyen d'obturation sélective (8) des sorties (5, 6, 7) logé dans le boîtier (3) pour contrôler l'écoulement d'air à travers celles-ci, caractérisé en ce que les sorties (5, 6, 7) du boîtier (3) sont situées dans un même plan.

2. Dispositif selon la revendication 1, caractérisé en ce que le moyen d'obturation précité comprend un boisseau (8) constitué de deux volets (9, 10) respectivement à deux calottes cylindriques concentriques (13, 17) de longueurs d'arcs de cercle différentes et montées, par l'intermédiaire de flasques radiaux (11, 12 ; 15, 16), l'une (13) solidaire en rotation d'un axe d'entraînement commandé monté sur le boîtier (3) et l'autre (17) à rotation autour de cet axe de façon à permettre l'entraînement simultané en rotation des deux calottes cylindriques (13, 17) en prolongement l'une de l'autre d'une position initiale d'ouverture de l'une (5) des sorties du boîtier (3), et d'obturation des autres sorties (6, 7) à une seconde position d'obturation de la sortie précédemment obturée (5) et d'ouverture de l'une (6) des autres sorties (6, 7), et l'entraînement en rotation à une troisième position de la calotte cylindrique de plus grande dimension (13) au-dessus de l'autre calotte cylindrique (7) bloquée à la seconde position d'obturation de la susdite sortie (5) de façon à obturer l'une précitée (6) des sorties et à ouvrir l'autre sortie restante (7).

3. Dispositif selon la revendication 2, caractérisé en ce que les deux calottes cylindriques (13, 17) sont maintenues en prolongement l'une de l'autre par un ressort (21) monté sur l'axe d'entraînement et ayant l'une de ses extrémités fixée à l'un (15) des flasques de la calotte cylindrique (17) et son autre extrémité fixée au flasque adjacent (12) de l'autre calotte cylindrique (13) et en ce que la calotte cylindrique de plus grande dimension (13) est déplacée au-dessus de l'autre calotte (17) à l'encontre de la force de rappel du ressort (21) maintenant les deux calottes en prolongement l'une de l'autre.

4. Dispositif selon la revendication 2 ou 3, caractérisé en ce que l'un (15) des flasques de la calotte cylindrique de plus faible dimension (17) porte un pion (18) traversant à la fois une lumière curviligne (19) du flasque adjacent (12) de l'autre calotte cylindrique (13) et une lumière curviligne analogue (20) réalisée dans une paroi d'extrémité (3b) du boîtier (3) et prolongeant, en position initiale des deux calottes, l'autre lumière curviligne (19) en étant concentriques toutes les deux à l'axe d'entraînement, le pion (18) se trouvant sensiblement en butée dans les deux fonds superposés respectivement des deux lumières en prolongement l'une de l'autre (19, 20) des flasques (12, 15) des calottes (13, 17) à la position initiale de celles-ci et en ce qu'à la seconde position précitée, le pion (18) est en butée contre le fond de la lumière (20) du boîtier (3) pour bloquer en rotation la calotte de plus faible dimension (17).

5. Dispositif selon l'une des revendications 2 à 4, caractérisé en ce que la calotte de plus grande dimension (13) comprend deux ouvertures (13a, 13b) décalées angulairement et axialement correspondant respectivement à deux sorties (6, 7) du boîtier (3).

6. Dispositif selon l'une des revendications 2 à 5, caractérisé en ce que la calotte de plus faible dimension (17) est maintenue en position initiale d'obturation des sorties (6, 7) du boîtier (3) par un rebord (24) de celle-ci en appui sur une paroi (3c) du boîtier (3) définissant la sortie ouverte (5) à cette position.

7. Dispositif selon l'une des revendications 2 à 6, caractérisé en ce que les deux calottes (13, 17) comprennent respectivement des fentes (25, 26) destinées à diriger un flux d'air secondaire dans une direction différente d'une sortie sélectionnée (5-7) du boîtier (3).

## Claims

1. Distribution device for an air-conditioning equipment of an automotive vehicle, comprising a casing (3) having an airinlet (4) and several outlets (5, 6, 7) which may be connected to louvres for the defrosting and defogging of window panes of the vehicle, for the heating of the passenger compartment of the vehicle and for the aeration of the latter, respectively, and a means (8) for the selective closing of the outlets (5, 6, 7) accommodated in the casing (3) for controlling the air flow for the outlets, characterized in that the outlets (5, 6, 7) of the casing (3) are located in a same plane.

2. Device according to claim 1, characterized in that the aforesaid closing means comprises a rotary slide valve (8) consisting of two flaps (9, 10) with two concentric cylindrical caps (13, 17), respectively, having different lengths of arcs of a circle and mounted through the medium of radial flanges (11, 12 ;15, 16), the one (13) made fast to for unitary rotation with a controlled drive shaft mounted onto the casing (3) and the other one (17) rotatable about this shaft so as to permit the simultaneous rotary drive of both cylindrical caps (13, 17) in extension of each other from one initial position for opening one (5) of the outlets of the casing (3) and for closing the other outlets (6, 7) to a second position for the closing of the previously closed outlet (5) and for the opening of one (6) of the other outlets (6, 7) and the rotary drive at a third position of the cylindrical cap of greater dimension (13) above the other cylindrical cap (7) blocked in the second position of closing of the above mentioned outlet (5) so as to close the aforesaid one (6) of the outlets and to open the other remaining outlet (7).

3. Device according to claim 2, characterized in that both cylindrical caps (13, 17) are held in extension of each other by a spring (21) mounted onto the drive shaft and having one of its ends fastened to one (15) of the flanges of the cylindrical cap (17) and its other end fastened to the adjacent flange (12) of the other cylindrical cap (13) and in that the cylindrical cap of greater dimension (13) is displaced over the other cap (17) against the return force of the spring (21) holding both caps in extension of one another.

4. Device according to claim 2 or 3, characterized in that one (15) of the flanges of the cylindrical cap with the smaller dimension (17) carries a pin (18) extending through both of a curvilinear slot (19) of the adjacent flange (12) of the other cylindrical cap (13) and of a like curvilinear slot (20) formed in an end wall (3b) of the casing (3) and extending in the initial position of both caps the other curvilinear slot (19) while being both of them concentric with the drive shaft, the pin (18) being substantially in abutment in both superposed bottoms, respectively, of both slots in extension of each other (19, 20) of the flanges (12, 15) of the caps (13, 17) in the initial position of the latter and in that in the aforesaid second position, the pin (18) is abutting upon the bottom of the slot (20) of the casing (3) for blocking against rotation the cap with the smaller dimension (17).

5. Device according to one of claims 2 to 4, characterized in that the cap with the greater dimension (13) comprises two angularly and axially offset openings (13a, 13b) corresponding to two outlets (6, 7), respectively, of the casing (3).

6. Device according to one of claims 2 to 5, characterized in that the cap with the smaller dimension (17) is held in the initial position of closing of the outlets (6, 7) of the casing (3) by a raised edge (24) thereof bearing upon a wall (3c) of the casing (3) defining the outlet (5) open in this position.

7. Device according to one of claims 2 to 6, characterized in that both caps (13, 17) comprise slits (25, 26), respectively, intended to direct a secondary air flux in a different direction from a selected outlet (5, 7) of the casing (3).

## Patentansprüche

1. Verteilungsvorrichtung für eine Klimatisierungsanlage eines Kraftfahrzeuges, mit einem einen Lufteinlass (4) und mehrere Auslässe (5, 6, 7) aufweisenden Gehäuse (3), die jeweils an Öffnungen zum Entfrosten und zur Beseitigung des Beschlages der Fensterscheiben des Fahrzeuges, zur Erwärmung des Fahrgastraumes des Fahrzeuges und zur Belüftung desselben angeschlossen werden können, und einem in dem Gehäuse (3) untergebrachten Mittel (8) zum wahlweisen Verschluss der Auslässe (5, 6, 7), um die Luftströmung durch dieselben zu steuern, dadurch gekennzeichnet, dass die Auslässe (5, 6, 7) des Gehäuses (3) in einer selben Ebene gelegen sind.

2. Vorrichtung nach Anspruch 1, dadurch gekennzeichnet, dass das vorgenannte Verschlussmittel ein aus zwei Klappen (9, 10) jeweils mit zwei konzentrischen zylindrischen Kappen (13, 17) mit unterschiedlichen Kreisbogenlängen bestehendes scheffelförmiges Glied (8) umfasst, wobei die Kappen über radiale Flanschen (11, 12 ; 15, 16) angeordnet sind, wobei die eine (13) mit einer an dem Gehäuse (3) angeordneten gesteuerten Antriebswelle drehfest verbunden ist und die andere Kappe (17) um diese Welle herum drehbar angeordnet ist, um den gleichzeitigen Drehantrieb der beiden zylindrischen Kappen (13, 17) im Fortsatz voneinander von einer ursprünglichen Stellung ab zur Öffnung des einen Auslasses (5) der Auslässe des Gehäuses (3) und zur Schliessung der anderen Auslässe (6, 7) bis zu einer zweiten Stellung zum Schliessen des vorangehend geschlossenen Auslasses (5) und zum Öffnen des einen Auslasses (6) der anderen Auslässe (6, 7) und den Drehantrieb bis zu einer dritten Stellung der zylindrischen Kappe grösster Abmessung (13) oberhalb der anderen in der zweiten Stellung zum Verschliessen des obengenannten Auslasses (5) festgehaltenen zylindrischen Kappe (7) zu gestatten, um den vorgenannten einen Auslass (6) der Auslässe zu verschliessen und den übrigen Auslass (7) zu öffnen.

3. Vorrichtung nach Anspruch 2, dadurch gekennzeichnet, dass die beiden zylindrischen Kappen (13, 17) im Fortsatz voneinander durch eine an der Antriebswelle angeordnete Feder (21) gehalten werden, wobei die Feder mit dem einen Ende ihrer Enden an dem einen Flansch (15) der Flanschen der zylindrischen Kappe (17) befestigt ist und mit seinem anderen Ende an dem anschliessenden Flansch (12) der anderen zylindrischen Kappe (13) befestigt ist, und dass die zylindrische Kappe grösserer Abmessung (13) oberhalb der anderen Kappe (17) entgegen der Rückstellkraft der die beiden Kappen im Fortsatz voneinander haltenden Feder (21) verschoben wird.

4. Vorrichtung nach Anspruch 2 oder 3, dadurch gekennzeichnet, dass der eine Flansch (15) der Flanschen der zylindrischen Kappe kleinerer Abmessung (17) einem ein krummliniges Langloch (19) des anschliessenden Flansches (12) der anderen zylindrischen Kappe (13) und ein in einer Endwand (3b) des Gehäuses (3) gebildetes ähnliches krummliniges Langloch (20) gleichzeitig durchsetzenden Stift (18) trägt, wobei das zuletzt genannte Langloch (20) in der ursprünglichen Stellung der beiden Kappen das andere krummlinige Langloch (19) fortsetzt und sie beide mit der Antriebswelle konzentrisch sind, wobei der Stift (18) sich etwa im Anschlag an den beiden übereinanderliegenden Böden jeweils der beiden sich einander verlängernden Langlöcher (19, 20) der Flanschen (12, 15) der Kappen (13, 17) in der ursprünglichen Stellung derselben befindet, wobei der Stift (18) im Anschlag an dem Boden des Langlochs (20) des Gehäuses (3) ist, um die Kappe kleinerer Abmessung (17) gegen Drehung festzuhalten.

5. Vorrichtung nach einem der Ansprüche 2 bis 4, dadurch gekennzeichnet, dass die Kappe grösserer Abmessung (13) zwei jeweils zwei Auslässen (6, 7) des Gehäuses (3) entsprechende winkelartig und axial versetzte Öffnungen (13a, 13b) umfasst.

6. Vorrichtung nach einem der Ansprüche 2 bis 5, dadurch gekennzeichnet, dass die Kappe kleinerer Abmessung (17) in der ursprünglichen Stellung zum Verschliessen der Auslässe (6, 7) des Gehäuses (3) durch eine Randleiste (24) derselben gehalten wird, welche sich an einer den in dieser Stellung offenen Auslass (5) abgrenzenden Wand (3c) des Gehäuses (3) abstützt.

7. Vorrichtung nach einem der Ansprüche 2 bis 6, dadurch gekennzeichnet, dass die zwei Kappen (13, 17) jeweils Schlitze (25, 26) aufweisen, die bestimmt sind, einen sekundären Luftstrom in einer unterschiedlichen Richtung eines gewählten Auslasses (5-7) des Gehäuses (3) zu leiten.
